(19) Europäisches Patentamt
European Patent Office
Office européen des brevets

(11) Publication number: 0 303 164 A2

# (12) EUROPEAN PATENT APPLICATION

(21) Application number: 88112580.1

(22) Date of filing: 03.08.88

(51) Int. Cl.4: C08G 59/62 , C08J 5/24

(30) Priority: 10.08.87 US 84609

(43) Date of publication of application: 15.02.89 Bulletin 89/07

(84) Designated Contracting States: AT BE CH DE ES FR GB IT LI NL SE

(71) Applicant: THE DOW CHEMICAL COMPANY
2030 Dow Center Abbott Road P.O. Box 1967
Midland Michigan 48640-1967(US)

(72) Inventor: Gantt, Gary R.
247 Magnolia
Brazsoria Texas 77422(US)
Inventor: Berman, Jody R.
406 Wisteria
Lake Jackson Texas 77566(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

## (54) Curing agent compositions laminating varnishes containing same and laminates prepared therefrom.

(57) Curing agents for epoxy resins are disclosed which comprise a mixture of a halogen substituted dihydric phenol such as tetrabromobisphenol A and a material having an average of more than two phenolic hydroxyl groups per molecule such as a phenolformaldehyde novolac resin. The curing agents are particularly useful in epoxy resin varnish formulations for preparing prepreg laminating materials for use in electrical and electronic applications.

EP 0 303 164 A2

# CURING AGENT COMPOSITIONS, LAMINATING VARNISHES CONTAINING SAME AND LAMINATES PREPARED THEREFROM

The present invention concerns curing agents for epoxy resin laminating varnishes, laminating varnishes containing such curing agents and laminates prepared from these laminating varnishes.

Laminating varnishes have usually been prepared from epoxy resins and a curing agent, usually an amine curing agent. In varnishes used for preparing laminates for use in the electrical and electronic industries the curing agent is usually dicyandiamide catalyzed or promoted by substances such as 2-methylimidazole or dimethylbenzylamine. In preparing the B-staged preimpregnated substrate materials (prepreg) from which the laminates are prepared, the dicyandiamide curing agent can crystallize and cause dicyandiamide rich spots in the prepreg. While this crystallization does not always occur, it does occur often enough to be a problem for the laminator.

It would be desirable to have a laminating varnish which has a reduced tendency to form crystals on the prepreg and has fewer limitations in terms of processing parameters while still providing acceptable physical properties such as laminate glass transition temperature. It would also be desirable to have varnishes which result in cured products which have improved thermal stability, improved moisture resistance or both.

The present invention pertains to a curing agent for epoxy resins which comprises a mixture of (1) at least one halogen substituted organic compound containing two aromatic hydroxyl groups per molecule and (2) at least one organic compound having an average of more than two phenolic hydroxyl groups per molecule; and wherein components (1) and (2) are employed in quantities such that from 20 to 80, percent of the aromatic hydroxyl groups contained in components (1) and (2) are contributed by component (1) and from 80 to 20 percent of the aromatic hydroxyl groups contained in components (1) and (2) are contributed by component (2).

The present invention also pertains to a laminating varnish composition comprising

(A) a diglycidyl ether of a dihydric phenol;

(B) the aforementioned curing agent for epoxy resins; and

(C) a catalytic quantity of a suitable catalyst for reacting a vicinal epoxy group with a phenolic hydroxyl group; and wherein components (A) and (B) are present in quantities which provide a ratio of phenolic hydroxyl groups per epoxide group of from 0.8:1 to 1.1:1.

Another aspect of the present invention pertains to a substrate material impregnated with the aforementioned laminating varnish.

A further aspect of the present invention pertains to a laminate comprising two or more layers of the aforementioned impregnated substrate material which laminate has subsequently been cured.

A still further aspect of the present invention pertains to a laminate comprising two or more layers of the aforementioned impregnated substrate material and an electrical conducting material as an outer layer which laminate has subsequently been cured.

The present invention provides a laminating varnish which has a reduced tendency to form crystals on the prepreg, has fewer limitations in terms of processing parameters or both while still providing acceptable physical properties such as laminate glass transition temperature. The present invention also provides varnishes which result in cured products having improved thermal stability, improved moisture resistance or both.

The curing agent of the present invention is suitably prepared by melt mixing the components in the absence of a suitable solvent or inert liquid diluent at temperatures of from 150° C to 200° C, suitably from 175° C to 200° C, more suitably from 175° C to 190° C. The curing agent can also be prepared by mixing the components in the presence of a suitable solvent or inert liquid diluent or mixture of inert liquids and/or diluents at temperatures of from 5° C to 80° C, suitably from 10° C to 70° C, more suitably from 15° C to 60° C, most suitably from 20° C to 50° C. Suitable solvents or liquid diluents include, for example, ketones, alcohols, glycol ethers, aromatic hydrocarbons, polar aprotic solvents, or combinations thereof. Particularly suitable such solvents or liquid diluents include, for example, acetone, methyl ethyl ketone, ethylene glycol monomethyl ether, propylene glycol monomethyl ether, dimethylformamide, dimethyl sulfoxide, sulfolane, N-methylpyrrolidone, toluene, xylene, or combinations thereof.

Suitable halogen substituted dihydric phenols which can be employed herein include, for example, those represented by the following formulas I, II or III

FORMULA I

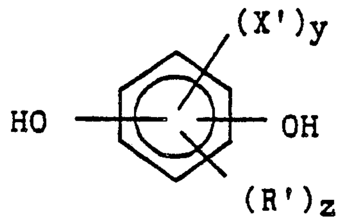

FORMULA II

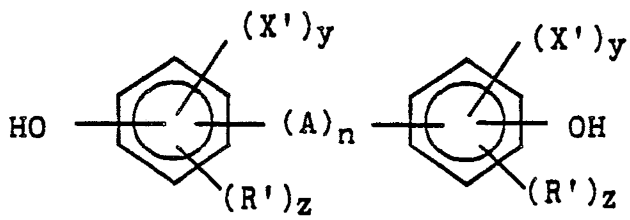

FORMULA III

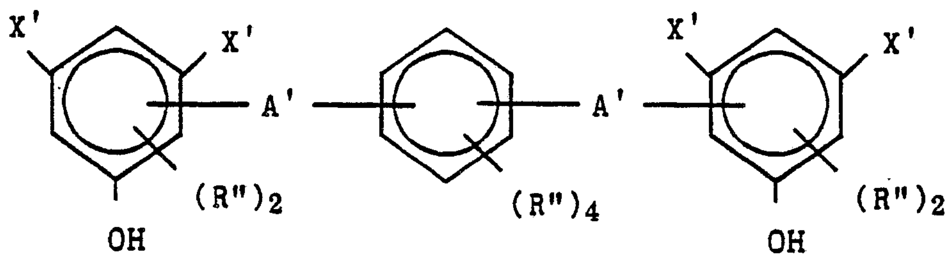

wherein each A is independently a divalent hydrocarbyl or a halogen substituted divalent hydrocarbyl group having from 1 to 12, preferably from 1 to 6, carbon atoms, -O-, -S-, -S-S-, -SO-, $-SO_2-$, or -CO-; each $A'$ is independently a divalent hydrocarbyl group having from 1 to 4 carbon atoms: each $R'$ is independently, hydrogen, or a hydrocarbyl or hydrocarbyloxy group having from 1 to 10, preferably from 1 to 4, carbon atoms; each $R''$ is independently hydrogen, a hydrocarbyl or hydrocarbyloxy group having from 1 to 12, preferably from 1 to 4 carbon atoms or a halogen, preferably chorine or bromine; each $X'$ is a halogen, preferably bromine; n has a value of zero or 1; y has a value from 1 to 4 and z has a value of 4-y. Particularly suitable bisphenols include, for example, tetrabromobisphenol F, tetrabromobisphenol K, tetrabromobisphenol A, tetrabromotetramethylbiphenol, tetrabromotetramethylbisphenol F, wherein the halogen atoms are either ortho or meta to the hydroxyl group, and combinations thereof.

The term hydrocarbyl as employed herein means any aliphatic, cycloaliphatic, aromatic, aryl substituted aliphatic or cycloaliphatic, or aliphatic or cycloaliphatic substituted aromatic groups. Likewise, the term hydrocarbyloxy means a hydrocarbyl group having an oxygen linkage between it and the object to which it is attached.

Suitable materials having an average of more than two aromatic hydroxyl groups per molecule include, for example, the novolac resins prepared by reacting, in the presence of an acid catalyst, an aldehyde with a phenolic hydroxyl-containing compound. Suitable such novolac resins include, for example, those represented by the following formula IV.

FORMULA IV

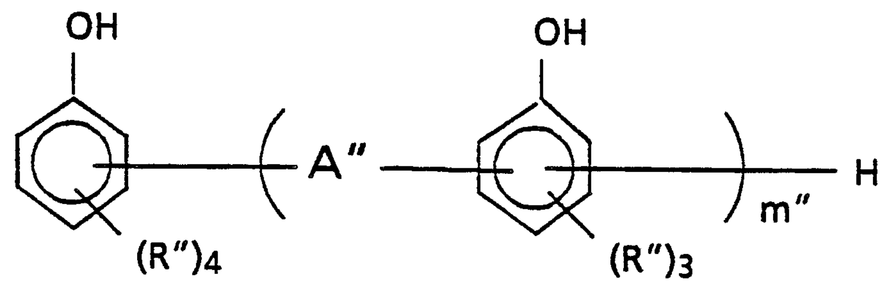

wherein $A''$ is a divalent hydrocarbyl group having from 1 to 12, preferably from 1 to 4, carbon atoms; each $R''$ is independently hydrogen, a hydrocarbyl or hydrocarbyloxy group having from 1 to 12, preferably from 1 to 4, carbon atoms, or a halogen, preferably chlorine or bromine; and $m''$ has an average value from 1.001 to 7.

Suitable aldehydes which are useful in preparing the novolac resins include, for example, formaldehyde, acetaldehyde, propionaldehyde, hydroxybenzaldehyde and combinations thereof. Suitable phenolic hydroxyl-containing compounds include, for example, phenols, halogenated phenols, and alkyl phenols. Particularly suitable phenolic hydroxyl-containing compounds which are useful in preparing the novolac resins include, for example, phenol, chlorophenol, bromophenol, methylphenol, ethyl- phenol, dimethylphenol, and combinations thereof.

Other suitable materials having more than two phenolic hydroxyl groups per molecule include, for example, the various isomers of trihydroxybenzene and materials represented by the following formulas V and VI

FORMULA V

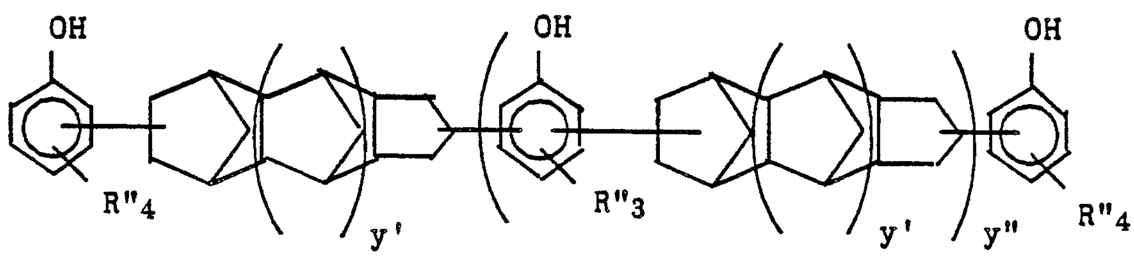

FORMULA VI

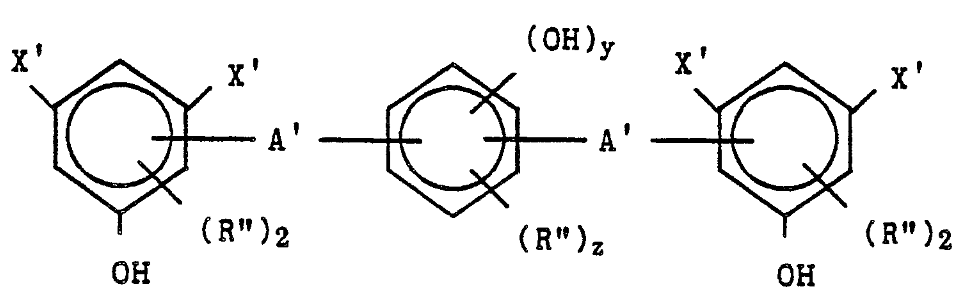

wherein $A'$, $R''$ $X'$, y and z are as described previously; $y'$ has a value from zero to 2 and $y''$ has a value of 1 to 2. Those represented by formula V are sometimes referred to as hydrocarbon novolac resins and are more fully described by Vegter and Sinnema in U.S. Patent 3,536,734 and by Nelson in U.S. 4,390,680.

The halogen substituted organic material containing two aromatic hydroxyl groups per molecule, component (1), and the organic material containing an average of more than two phenolic hydroxyl groups

per molecule, component (2), are employed in quantities such that from 20 to 80, suitably from 30 to 70, more suitably from 50 to 70, most suitably from 60 to 70 percent of the aromatic hydroxyl groups contained in components (1) and (2) are contributed by component (1) and from 80 to 20, suitably from 70 to 30, more suitably from 50 to 30, most suitably from 40 to 30 percent of the aromatic hydroxyl groups contained in components (1) and (2) are contributed by component (2).

Suitable diglycidyl ethers of dihydric phenols which can be employed herein include, for example, those represented by the following formulas VII and VIII

FORMULA VII

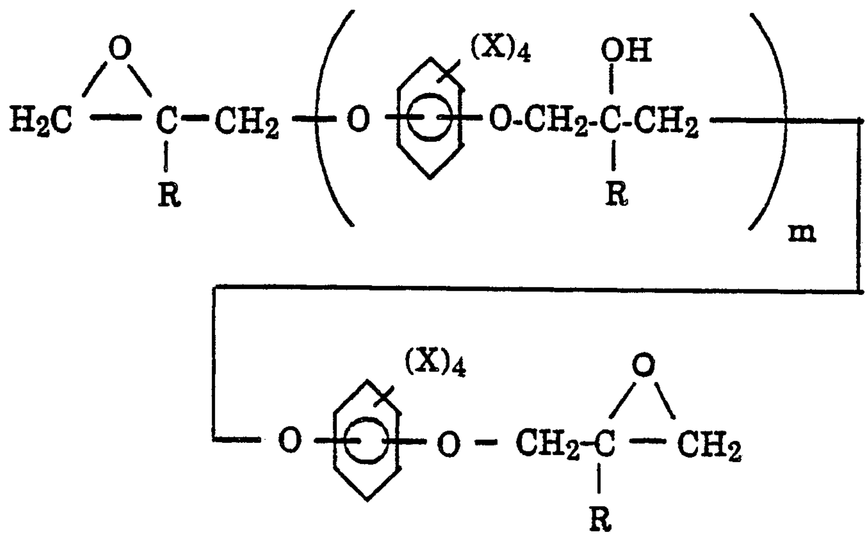

FORMULA VIII

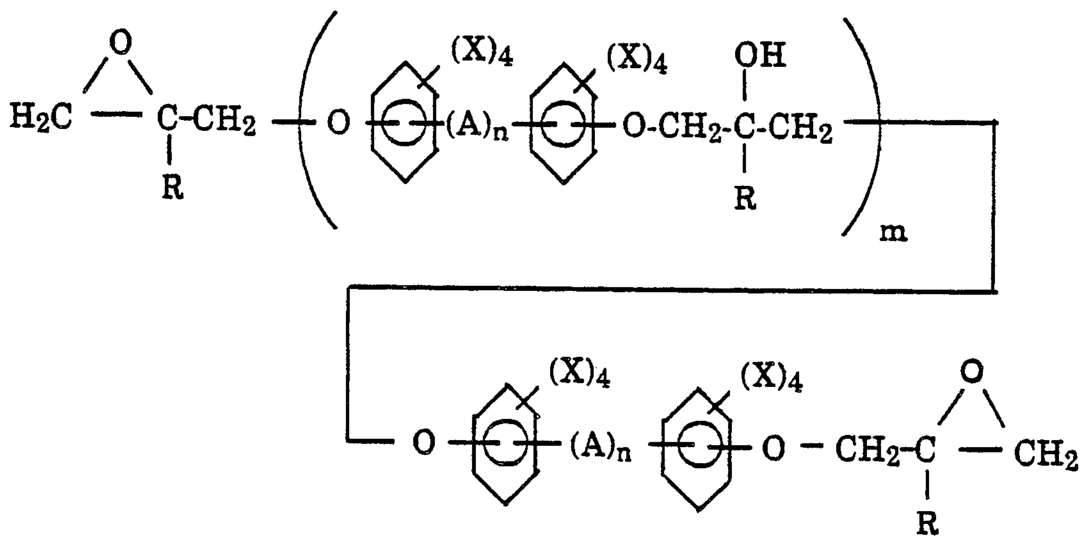

wherein each A is independently a divalent hydrocarbyl or halogen substituted hydrocarbyl group having from 1 to 12, preferably from 1 to 6 carbon atoms, -O-, -S-, -S-S-, -SO-, $-SO_2$, or -CO-; each R is independently hydrogen or a hydrocarbyl group having from 1 to 4 carbon atoms: each X is independently hydrogen, a halogen or a hydrocarbyl group having from 1 to 10, preferably from 1 to 4 carbon atoms; n has a value of zero or 1 and m has a value from zero to 5, suitably from 0.001 to 4.5, more suitably from 0.01 to 4, most suitably from 0.01 to 3.5.

The epoxy resin, component (A), and the epoxy resin curing agent, component (B), are present in quantities which provide a phenolic hydroxyl group to epoxide group ratio of from 0.8:1 to 1.1:1, suitably from 0.85:1 to 1.05:1, more suitably from 0.9:1 to 1:1, most suitably from 0.94:1 to 1:1.

Suitable catalysts for reacting a vicinal epoxy group with a phenolic hydroxyl group which can be employed herein include, for example, imidazoles, tertiary amines, quaternary ammonium compounds, phosphonium compounds, phosphines, and combinations thereof. Suitable imidazoles include, for example, 2-methylimidazole, 2-ethyl-4-methylimidazole, 2-ethylimidazole, 1-methylimidazole, 1-propylimidazole, 2-phenylimidazole and combinations thereof. Suitable tertiary amines include, for example, N,N-dimethylbenzylamine, N,N-dimethylaniline, triethylamine, tripropylamine, triphenylamine, and combinations thereof. Suitable quaternary ammonium catalysts which can be employed herein include, for example, benzyltrimethylammonium chloride, benzyltrimethylammonium bromide, tetrabutylammonium chloride and combinations thereof. Particularly suitable phosphonium compounds include, for example, ethyltriphenylphosphonium chloride, ethyltriphenylphosphonium bromide, ethyltriphenylphosphonium iodide, ethyltriphenylphosphonium acetate•acetic acid complex, tetrabutylphosphonium chloride, tetrabutylphosphonium bromide, tetrabutylphosphonium iodide, tetrabutylphosphonium acetate•acetic acid complex and combinations thereof. Suitable such catalysts which can be employed herein include, for example, those disclosed in U. S. Patents 3,306,872; 3,341,580; 3,379,684; 3,477,990; 3,547,881; 3,948,855; 4,048,141; 4,093,650; 4,131,633; 4,132,706; 4,171,420; 4,177,216; 4,302,574; 4,320,222; 4,366,295 and 4,389,520.

The catalysts are employed in quantities which are sufficient to catalyze the reaction between a vicinal epoxide group and a phenolic hydroxyl group. Usually, this amounts to quantities of from 0.01, to 1, suitably from 0.02 to 0.75, more suitably from 0.05 to 0.5, percent by weight of the amount of epoxy resin and epoxy resin curing agent employed.

The laminating varnish of the present invention can also, if desired, contain an inert solvent or diluent, which is employed in an amount of from zero to 50, suitably from 10 to 40, more suitably from 20 to 35, most suitably from 25 to 30, percent by weight of a suitable solvent or diluent based upon the combined weight of components (A) and (B), the epoxy resin and the epoxy resin curing agent.

Suitable substrate materials which can be employed herein include natural and synthetic materials such as, for example, nylon, rayon, fiberglass, quartz, aramid, polytetrafluroethylene and combinations thereof. These substrate materials can be in mat, spun, woven or other suitable form.

Suitable electrical conducting materials which can be employed in electrical laminates prepared from the prepreg materials disclosed herein include, for example, copper, gold, silver, and combinations thereof.

The B-staged preimpregnated substrate materials (prepregs) are suitably prepared by dipping or continuously passing the substrate material through a container of the laminating varnish and subsequently through a heated tower. The resin in the resulting B-staged preimpregnated substrate material is partially cured to the extent that it will still flow properly when heat and pressure are applied during formation of the laminate, but that the surface of the B-staged preimpregnated material is not tacky at room temperature and the individual plies will not adhere to each other without the application of heat.

The laminates are prepared by placing two or more layers of B-staged prepreg materials which have been cut to the desired size into a heated press at a temperature of from 150°C to 190°C, suitably from 160°C to 180°C and a pressure of from 50 psig (446 kPa) to 1000 psig, (6,996 kPa) suitably from 100 psig (3,548 790 kPa) to 500 psig (kPa). Although a heated press is mentioned, any suitable means for applying temperature and pressure to the multiple layers of preimpregnated substrate materials can be employed. One such method is by placing the layers of preimpregnated substrate materials into a vacuum bag and placing the vacuum bag into an autoclave. If desired, one or more outer layers, either the top or bottom or both top and bottom, of an electrical conducting material can be employed in the preparation of the laminate.

Routine microscopic inspection of the B-staged preimpregnated substrate materials under polarized light will reveal whether or not crystals of curing agent have been formed in the resin portion of the preimpregnated substrate. Any undissolved or recrystallized curing agent will appear in the form of crystals which are readily seen by routine microscopic examination under polarized light.

It is desirable that the laminating varnish have a wide processing latitude in terms of linear speed in forming the B-staged preimpregnated substrate at the particular temperature employed in preparing the B-staged prepreg material.

It is also desired that the B-staged resin have a gel time which permits the resin to flow properly during laminate preparation. Suitable gel times at 171°C are from 50 to 250 seconds.

The following examples are illustrative of the invention.

Example

Laminating varnishes consisting of the following components were prepared by dissolving the components in the indicated quantities of methyl ethyl ketone (MEK).

Varnish A

5752 g (31.9 epoxy equiv.,EE) of a diglycidyl ether of bisphenol A having an epoxide equivalent weight (EEW) of 180.

5563 g (20.5 phenolic hydroxyl equiv., PHE) of tetrabromobisphenol A (bromine atoms in the ortho position with respect to the hydroxyl groups).

1188 g (11.4 PHE) of a phenol-formaldehyde novolac resin having an average functionality of 5.6 and a phenolic hydroxyl equivalent weight (PHEW) of 104.

4400 g of MEK.

Varnish B (Not an Example of the Present Invention)

3172 g (17.6 EE) of a diglycidyl ether of bisphenol A having an epoxide equivalent weight (EEW) of 180.

1830 g (17.6 PHE) of a phenol-formaldehyde novolac resin having an average functionality of 5.6 and a phenolic hydroxyl equivalent weight (PHEW) of 104.

2143 g of MEK.

Each varnish was catalyzed with a 20% by weight methanol solution of 2-methylimidazole (2-MI) in an amount which provides 0.1 part of 2-MI per one hundred parts by weight (pbw) of non-volatile reactants. These laminating varnishes were then used to impregnate a fiberglass cloth substrate by continuously passing the substrate material through the laminating varnish. The impregnated cloth was then continuously passed through a 4-zone, forced air, treater wherein the first three zones are heated to 350 °F (176.67 °C) so as to remove the solvent and provide a B-staged preimpregnated material (prepreg). The following Table I, shows the relationship of the operating speed of the treater to the degree of B-staging achieved.

TABLE I

| VARNISH | TREATER SPEED ft./min. | TREATER SPEED mm./sec. | GEL TIME OF PREPREG RESIN[1] @ 340°F (171.1°C) IN SECONDS | COMMENTS |
|---|---|---|---|---|
| A | 6 | 30.48 | 65 | Acceptable[2] |
| A | 7 | 35.56 | 113 | Acceptable[2] |
| A | 8 | 40.64 | 143 | Acceptable[2] |
| A | 10 | 50.8 | 170 | Acceptable[2] |
| A | 12 | 60.96 | 201 | Acceptable[2] |
| A | 14 | 71.12 | 230 | Acceptable[2] |
| B* | 8 | 40.64 | 0 | Gelled[4] |
| B* | 10 | 50.8 | 60 | Acceptable[2] |
| B* | 12 | 60.96 | N.D.[3] | Tacky |

*Not an example of the present invention.

[1]The gel time is determined by scraping the resin from the B-staged laminate, placing the resin on the heated surface of a hot plate, and stroking the molten polymer with a wooden spatula. The gel point is determined as that point at which the polymer will not form strings as the spatula is pulled away. The gel time is the amount of time required to reach the gel point after the prepreg resin is placed on the heated surface.

[2]Acceptable means that the prepreg can be used to prepare laminates with a heated press.

[3]N. D. means that the gel time is not determined. This prepreg is not usable because the layers of material on the prepreg roll stick to each other and can not be separated.

[4]Gelled means that the varnish composition solidifies on the substrate and while not fully cured, it does not flow appreciably when the impregnated substrate is placed in a heated press. Without proper flow, the laminate layers do not adhere together properly in the press.

The data in Table I clearly demonstrates that Varnish A, which is an example of the present invention, provides a wide processing latitude in the impregnation of substrate materials whereas Varnish B has only a very narrow processing latitude. Varnish A has a processing latitude of 6 ft./min. to 14 ft./min (1.8 m/min to 4.3 m/min). Varnish B, not an example of the present invention, has a processing speed of only 10 ft./min (3.04 m/min).

Example 2

Portions of prepreg prepared in the same manner as in Example 1 were subjected to a modified Bell Laboratories Scaled Flow Test. Ten plies of prepreg, each 6 in. x 6 in. (152.4 mm x 152.4 mm) were pressed between 5 in. x 5 in. (127 mm x 127 mm) aluminum plates in a hydraulic press for 30 mn. at 250° F (121.1° C) and 100 psig. (790 kPa). The resulting laminate was removed, cooled, and cut diagonally. Thickness measurements were taken at three equal intervals along the diagonal edge and averaged. The results are given in Table II.

TABLE II

| PREPREG VARNISH (Example 1) | PREPREG GEL TIME[1], SEC. | LAMINATE THICKNESS | |
|---|---|---|---|
| | | MILS/PLY | MM/PLY |
| A | 123 | 7.1 | 0.18 |
| B* | 60 | 5.2 | 0.132 |

*Not an Example of the present invention.
[1]The prepreg gel time is determined by the technique described in Example 1.

Example

Laminating varnishes consisting of the following components were prepared by dissolving the components in the indicated solvent(s).

Varnish C

2302 g (12.8 EE) of a diglycidyl ether of bisphenol A having an EEW of 180.

2225 g (8.2 PHE) of tetrabromobisphenol A wherein the bromine atoms are ortho with respect to the hydroxyl group.

475 g (4.6 PHE) of a phenol-formaldehyde novolac resin having an average hydroxyl functionality of 5.6 and a PHEW of 104.

1760 g of MEK.

Varnish D

5217 g (10.2 EE) of an 80% by weight acetone solution of a brominated epoxy resin commercially available from The Dow Chemical Company as D.E.R.TM532-A80 epoxy resin. This epoxy resin solution has an EEW of 511, contains 15.95% by weight bromine and the bromine atoms are ortho with respect to the ether oxygen atoms.

1092 g (4.0 PHE) of tetrabromobisphenol A wherein the bromine atoms are ortho with respect to the hydroxyl group.

640 g (6.2 PHE) of a phenol-formaldehyde novolac resin having an average hydroxyl functionality of 5.6 and a PHEW of 104.

2230 g of MEK.

Varnish E (Comparative)

7880 g (15.4 EE) of an 80% by weight acetone solution of a brominated epoxy resin commercially available from The Dow Chemical Company as D.E.R.TM532-A80 epoxy resin. This epoxy resin solution has an EEW of 511, contains 15.95% by weight bromine and the bromine atoms are ortho with respect to the ether oxygen atoms.

193.4 g (3 parts per hundred parts of epoxy resin solution solids) of dicyandiamide.

870 g of dimethylformamide.

870 g of propylene glycol monomethyl ether.

1087 g of acetone.

Varnishes C and D were catalyzed with a 20 wt.% methanol solution of 2-methyl imidazole (2-MI) and Varnish E was catalyzed with an 11.4 weight percent dimethylformamide solution of 2-MI to provide an active catalyst level of 0.1 parts per hundred parts of solution solids. These varnishes were used to prepare fiberglass prepreg materials by the method described in Example 1. This prepreg was used to prepare fully cured 8 ply laminates in a hydraulic press. The laminates were cut into the appropriate sized coupons, $2\frac{1}{2}$ in. x 3 in. x 1/8 in. (63.5 mm. x 76.2 mm. x 3.2 mm.) and immersed in boiling water. The data in Table III shows the weight gain experienced by the laminates over the period of the test.

TABLE III

| PREPREG VARNISH | IMMERSION TIME HOURS | WEIGHT GAIN, % |
|---|---|---|
| C | 48 | 0.572 |
| C | 400 | 0.570 |
| D | 48 | 0.566 |
| D | 400 | 0.654 |
| E* | 48 | 1.240 |
| E* | 400 | 2.601 |

*Not an example of the present invention.

The data in Table III clearly shows that laminates prepared from the prepregs prepared from the varnishes of the present invention, Varnishes C and D, do not experience the weight gain after immersion in boiling water for prolonged periods of time as does that prepared from Varnish E.

EXAMPLE 4

A solution was prepared by mixing at a temperature of 25 °C, 2.17 parts by weight (pbw) (0.0629 PHE) of tetrabromobisphenol A wherein the bromine atoms are ortho to the hydroxyl groups (TBBA), 3.16 pbw (0.1389 EE) of a diglycidyl ether of bisphenol A (DGEBA) having an (EEW) of 180, 1 pbw (0.076 PHE) of a 5.6 functional phenol-formaldehyde novolac resin having a (PHEW) of 104 available from Schenectady Chemical Company as HRJ-2190, and 3.16 pbw of methyl ethyl ketone.

To this solution was added a sufficient amount of a 20% methanol solution of 2-methyl imidazole (2-MI) to provide 0.1 pbw of 2-MI per 100 pbw of solution solids (non-volatiles). A portion of the resulting mixture was gelled on a stroke cure plate and cured in an oven at 177 °C for one hour. The glass transition temperature of the cured system, as measured by differential scanning calorimetry (DSC), was 138 °C. A small sample of the cured specimen was placed in a thermogravimetric analyzer (TGA) and heated from 100 °C to 250 °C at a rate of 25 °C/min. The sample was then held at 250 °C for an additional 30 minutes. The sample retains 99.9% of its original weight after thistreatment.

Comparitive Experiment A

A solution was prepared as in example 4 from 11.4 pbw (0.0629 PHE) of TBBA, 21.93 pbw (0.1828 EE) of DGEBA, 1 pbw of dicyandiamide, 13.3 pbw of methyl ethyl ketone and 10 pbw of dimethylformamide. To this solution was added a sufficient amount of a 20% methanol solution of 2-methyl imidazole (2-MI) to provide 0.1 pbw of 2-MI per 100 pbw of solution solids (non-volatiles). A portion of the resulting mixture was gelled in a manner described in example 4. The glass transition temperature of the cured resin is 137° C. When placed in the TGA and heated from 50° C to 250° C at a rate of 20° C/min. and then held at 250° C for 30 minutes, the sample retains only 98.67% of its original weight.

**Claims**

1. A curing agent composition for epoxy resins which comprises a mixture of (1) at least one halogen substituted organic compound containing two phenolic hydroxyl groups per molecule and (2) at least one compound having an average of more than two phenolic hydroxyl groups per molecule: and wherein from 20 to 80 percent of the hydroxyl groups contained in components (1) and (2) are contributed by component (1) and from 80 to 20 percent of the aromatic hydroxyl groups contained in components (1) and (2) are contributed by component (2).

2. A curing agent composition of Claim 1 wherein component (1) is a bromine substituted bisphenol and component (2) is a phenol-formaldehyde novolac resin.

3. A curing agent composition of Claim 2 wherein component (1) is tetrabromobisphenol A.

4. A laminating varnish composition comprising

(A) at least one epoxy resin which is a diglycidyl ether of a dihydric phenol:

(B) an epoxy resin curing agent composition of Claim 1 and

(C) a catalytic quantity of a suitable catalyst for reacting a vicinal epoxy group with a phenolic hydroxyl group;

wherein components (A) and (B) are present in quantities which provide a ratio of phenolic hydroxyl groups per epoxide group of from 0.8:1 to 1.1:1.

5. A laminating varnish composition of Claim 4 wherein component (A) is represented by the following formulas VII or VIII or a combination thereof

FORMULA VII

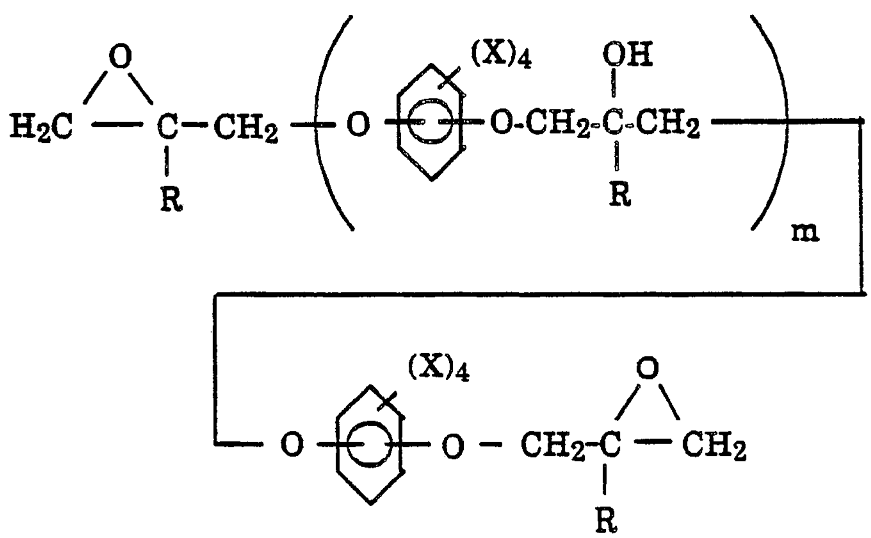

FORMULA VIII

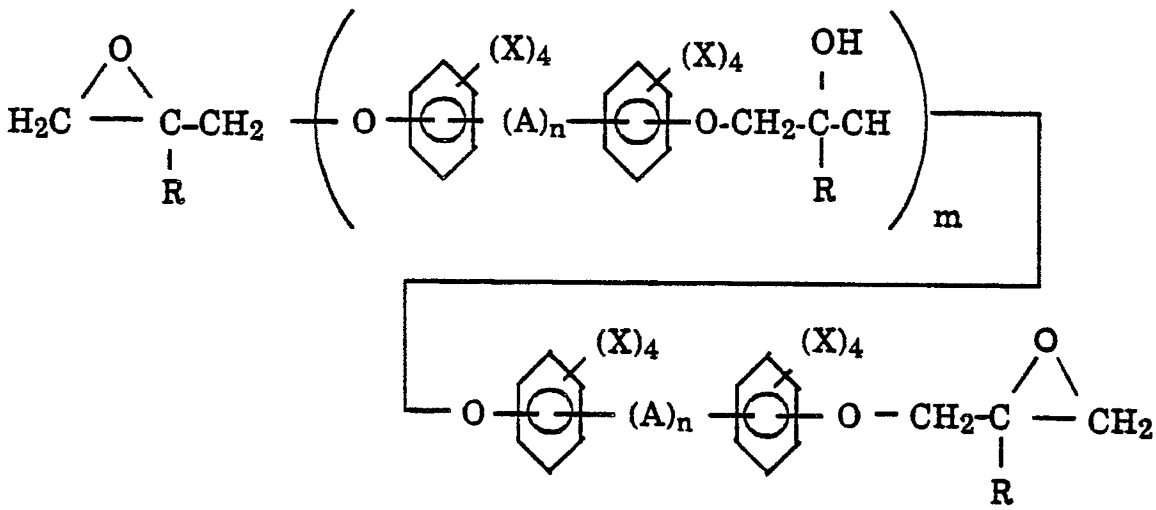

wherein each A is independently a divalent hydrocarbyl group having from 1 to 12 carbon atoms, -O-, -S-, -S-S-, -SO-, $-SO_2-$, or -CO; each R is independently hydrogen or a hydrocarbyl group having from 1 to 4 carbon atoms; each X is independently hydrogen, a halogen or a hydrocarbyl group having from 1 to 10 carbon atoms; n has a value of zero or 1 and m has a value from zero to 5.

6. A laminating varnish composition of Claim 4 or 5 wherein

(i) component (A) is a diglycidyl ether of bisphenol A;

ii) component (B-1) is a bromine substituted bisphenol;

(iii) component (B-2) is a phenol-formaldehyde novolac resin:

(iv) component (C) is an imidazole; and

(v) component (D), when present, is acetone, methyl ethyl ketone, toluene, xylene, dimethylformamide, propylene glycol monomethyl ether or a combination thereof.

7. A laminating varnish composition of Claim 6 wherein

(i) component (B-1) is tetrabromobisphenol A wherein the bromine atoms are either ortho or meta with respect to the aromatic hydroxyl group; and

(ii) component (C) is 2-methylimidazole.

8. A product comprising a substrate material impregnated with a laminating varnish of Claim 4, 5 or 6.

9. A laminate comprising two or more layers of a product of Claim 8.

10. A laminate comprising two or more layers of a product of Claim 8 with at least one outer layer of an electrical conducting material.